# FASCICULE DE BREVET EUROPEEN

(11) **EP 1 216 458 B1**
(45) Date de publication et mention de la délivrance du brevet: **29.11.2006**
(21) Numéro de dépôt: 00921003.0
(22) Date de dépôt: 11.05.2000
(51) Int. Cl.: G07F 7/10

(54) **PROCEDE PERMETTANT DE SECURISER DES DONNEES LORS DE TRANSACTIONS ET SYSTEME POUR SA MISE EN OEUVRE**
VERFAHREN ZUR ABSICHERUNG VON TRANSAKTIONSDATEN UND SYSTEM ZUR DURCHFÜHRUNG DES VERFAHRENS
METHOD FOR MAKING SECURE DATA DURING TRANSACTIONS AND IMPLEMENTING SYSTEM

(30) Priorité: 24.09.1999 CH 175299
(43) Date de publication de la demande: 26.06.2002
(73) Titulaire: Bauer, Eric, 6052 Hergiswil (CH)
(72) Inventeur: FAVRE, Emmanuel, CH-2400 Le Locle (CH); TONDINI, Stéphane, CH-1454 L'Auberson (CH)
(74) Mandataire: Micheli & Cie SA
(86) Numéro de dépôt international: PCT/IB2000/000625
(87) Numéro de publication internationale: WO 2001/022372

(56) Documents cités:
- EP-A- 0 723 251
- EP-A- 0 790 587
- DE-A- 19 716 861
- GB-A- 2 100 190
- GB-A- 2 329 499
- US-A- 5 317 637

## Description

La présente invention a pour objet un procédé permettant de sécuriser des données lors de transactions informatiques ainsi qu'un système pour sa mise en oeuvre. Plus particulièrement, l'invention a pour objet un procédé garantissant la confidentialité ou l'authenticité des données lorsqu'elles sont transmises sur un réseau public ou privé.

On connaît de nombreux systèmes de cryptage ou de chiffrement de documents ou de transactions qui permettent de transférer des informations entre deux personnes habilitées sans qu'un tiers puisse en prendre connaissance. Toutefois, ces systèmes de chiffrement, qu'ils soient symétriques ou asymétriques, présentent tous des inconvénients au niveau du stockage et de la distribution des clés de chiffrement. Dans ce qui va suivre, on entend par système de chiffrement symétrique, une méthode permettant de chiffrer un document à l'aide d'une clé secrète unique, la même clé permettant de chiffrer et de déchiffrer le document. Un système de chiffrement dit asymétrique comporte une paire de clés dont l'une dite clé publique, pour chiffrer un document et l'autre dite clé privée permettant de reconstituer le document chiffré. Dans le cas d'un système asymétrique, la clé dite publique ne permet pas de déchiffrer un document. Seule la clé privée correspondante peut déchiffrer le document ou la transaction.

Dans les deux cas se pose le problème du stockage et de la distribution des clés qui permettent de reconstituer le document original à partir du document ou de la transaction cryptée. En effet, les clés permettant de déchiffrer un document ou une transaction doivent être stockées quelque part dans la mémoire ou sur le disque dur de l'ordinateur des intervenants. Il en découle que si un tiers a accès à un poste de travail, il pourra retrouver la clé de chiffrement et ainsi avoir accès au contenu des documents ou des transactions confidentielles. Concernant les systèmes de chiffrement symétrique, il est nécessaire de disposer d'un canal sécurisé, différent des moyens de communication par lesquels vont transiter les informations chiffrées, pour transmettre la clé de chiffrement utilisée. Dans le cas d'un système de chiffrement asymétrique, la clé publique d'un utilisateur peut être librement distribuée sur un réseau informatique pour permettre le chiffrement de documents ou de transactions que seul le détenteur de la clé privée correspondante pourra reconstituer. Toutefois, on ne peut exclure qu'un tiers ayant les moyens d'intercepter les communications sur le réseau procède à une substitution de clés. Prenons par exemple le cas suivant. A et B désirent se transmettre des informations chiffrées sur un réseau public. A envoie sa clé publique à B. B utilise la clé publique de A pour chiffrer un document et envoie le document chiffré à A. En théorie, seul A peut déchiffrer le document envoyé par B à l'aide de sa clé privée. Supposons maintenant que C puisse intercepter les communications entre A et B. C génère une paire de clés de chiffrement. Lorsque A envoie sa clé publique à B, C l'intercepte et la substitue avec sa propre clé publique. B utilise la clé de C pour chiffrer le document et le transmet à A. C intercepte le document chiffré, le déchiffre à l'aide de sa clé privée puis le chiffre avec la clé publique transmise par A et le transmet à A qui reçoit le document normalement chiffré avec la clé publique transmise à B. On constate à l'aide de cet exemple que les systèmes de chiffrement asymétrique ne résolvent qu'en partie le problème de la distribution des clés de chiffrement.

Dans le domaine de la téléphonie mobile, le document EP-A-790587 divulgue une méthode d'initialisation d'une carte à puce placée dans un téléphone mobile basée sur la reconnaissance d'un nombre aléatoire transmis entre le téléphone et la carte à puce après un chiffrement asymétrique. A la suite de cette phase d'initialisation, un deuxième jeux de clés asymétrique est généré pour gérer les échanges de données d'une cession particulière.

Le document DE-A-19716861 décrit un système comprenant un ordinateur ainsi qu'une carte à puce permettant de coder des documents à transmettre ou à archiver. Le document est ensuite chiffré par une clé symétrique elle-même envoyée avec le document après avoir été chiffrée par un algorithme asymétrique.

Le procédé objet de l'invention a pour but de remédier aux inconvénients mentionnés ci-dessus en offrant une méthode permettant d'une part de vérifier que l'accès à un terminal ne peut s'effectuer que par une personne autorisée et d'autre part que les informations qui vont être chiffrées en vue de leur transmission ne pourront être lues que par leur destinataire, ces opérations s'effectuant sans qu'il n'y ait de stockage temporaire des clés de chiffrement sur les ordinateurs de l'émetteur ou du récepteur. A cet effet, le procédé objet de l'invention se caractérise par les étapes mentionnées à la revendication 1.

D'autres avantages ressortent de la description qui suit et des caractéristiques exprimées dans les revendications dépendantes. On citera en particulier la possibilité offerte par ce système de vérifier l'intégrité d'un document ou d'une transaction ainsi que l'identification d'un document ou d'une transaction, Par identification, on entend connaître avec certitude la personne émettrice du document. L'intégrité d'un document ou d'une transaction, quant à elle, se réfère à la possibilité de déterminer que le contenu de la transaction ou du document n'a pas été altéré, de quelque manière que ce soit, entre l'émetteur et le récepteur.

Dans la description qui suit, il sera fait référence à deux techniques de chiffrement connues. Le système DES (Data Encryption Standard) adopté en 1976 par le gouvernement américain est un exemple de chiffrement symétrique à clé unique. Comme exemple de technique de chiffrement asymétrique, on citera le RSA du nom de leurs auteurs (Rivest Shamir et Adelman). Cette technique de chiffrement asymétrique utilise une fonction mathématique à sens unique avec une 'gâche secrète' permettant d'inverser la fonction. Cette technique asymétrique nécessite une paire de clés pour être mise en oeuvre: une clé publique qui peut être librement distribuée et qui sert à chiffrer un document grâce à un algorithme asymétrique et une clé privée qui est la seule à pouvoir déchiffrer le document ou la transaction qui a été chiffré à l'aide de la clé publique correspondante. Ces deux techniques sont largement décrites dans la littérature et ne seront pas reprises en détail dans la présente demande. On notera toutefois que le chiffrement par un algorithme asymétrique (par exemple de type RSA) est environ mille fois plus lent que le chiffrement par un algorithme symétrique (par exemple de type DES). Ceci représente un obstacle lorsque l'on doit chiffrer des documents de très grande taille.

Quelque soit la technique de chiffrement utilisée, il faut disposer de clés d'une longueur importante (512,1024 bits ou plus) pour que le document chiffré devienne très difficilement déchiffrable. La longueur de la clé est un paramètre, mais pour générer des clés asymétriques dites fortes il est indispensable de les calculer à partir de grands nombres aléatoires au voisinage desquels on recherche systématiquement deux nombres premiers. Pour générer des clés asymétriques fortes, on soumet encore chaque paire de clés à des critères mathématiques supplémentaires et ce jusqu'à ce que tous les critères soient satisfaits. Concernant les clés symétriques, il n'est pas indispensable de chercher un nombre premier. La clé symétrique peut être formée d'une chaîne de caractères ou d'un nombre quelconque de longueur déterminée. Toutefois un nombre aléatoire de bonne qualité est préférable à un texte choisi par l'utilisateur puisque ce choix est dans certaines circonstances prévisible (par exemple utilisateur connu du faussaire). De plus, il existe un nombre fini de clés symétriques considérées comme étant faibles, on vérifiera en conséquence que la clé obtenue ne fait pas partie de ce groupe de clés faibles.

Le procédé objet de l'invention comporte tout d'abord une étape d'initialisation pour autoriser l'accès aux fonctions utilisateurs prévues par le programme d'application, telles le chiffrement de document ou l'implantation de signature digitale. Cette phase d'initialisation nécessite une brève description des composants du système permettant la mise en oeuvre du procédé. Le but à atteindre est de garantir la confidentialité d'une transmission de données entre deux utilisateurs disposant chacun d'un ordinateur personnel de type standard comportant des moyens de communication tels qu'un modem, une carte réseau ou tout autre moyen permettant d'établir une connexion distante en vue de transmettre bi-directionellement des données numériques. Ces ordinateurs sont en outre munis d'un dispositif de lecture de cartes à puce relié à l'ordinateur. De préférence, le lecteur de cartes à puce sera intégré dans le clavier de l'ordinateur.

Les cartes à puce destinées à être utilisées dans le lecteur sont des cartes classiques comportant au moins une unité de calcul, une mémoire non volatile, une mémoire volatile et un générateur analogique de nombres aléatoires. La mémoire de la carte présente au moins une zone protégée dans laquelle on ne peut lire, à l'aide d'un lecteur, les informations qui y ont été préalablement enregistrées. Le contenu de cette zone mémoire peut néanmoins être restitué et utilisé par l'unité de calcul de la carte. A titre d'exemple non limitatif, les cartes à puces dédiées à la cryptographie, c'est-à-dire munies d'un co-processeur cryptographique et des composants permettant de réaliser les fonctions annexes énumérées ci-dessus sont adaptées à la mise en oeuvre du procédé objet de l'invention. A cet effet, on implante dans une zone protégée de la mémoire de la carte à puce, une clé privée d'un système de chiffrement asymétrique, par exemple de type RSA. La clé publique correspondante est quant à elle intégrée dans le fichier contenant le code du programme destiné à être exécuté sur l'ordinateur. Pour renforcer la sécurité, la clé publique résidant dans le programme, n'est pas stockée en clair dans le fichier servant de support au programme d'application. Elle peut toutefois être reconstituée à partir d'informations saisies par l'utilisateur. A titre d'exemple non limitatif, une méthode d'implantation de la clé publique dans le programme d'application va maintenant être décrite.

Considérant une clé à implanter d'une longueur de 64 octets, on construit une table de nombres de 64 colonnes sur 128 lignes remplies de nombres aléatoires. Chaque colonne de cette table correspond à la position d'un octet de la clé. Chacune des lignes de cette table correspond à l'un des 128 signes du jeu de caractères standard. On décide ensuite d'une phrase de passe, puis on convertit cette phrase en une phrase comprenant le même nombre d'octets ou de caractères que la clé à implanter. Par exemple, en prenant une clé de 64 octets et une phrase de passe ne comportant que 30 caractères, on ajoute en 31 ème position le premier caractère de la phrase, décalé d'un nombre arbitraire de positions dans la table ASCII. La 32 ème position correspond au deuxième caractère de la phrase de passe décalé du même nombre de positions et ainsi de suite jusqu'à obtenir une phrase de 64 caractères. Chaque octet de la clé est ensuite implanté dans la table à une coordonnée x,y où x représente le y ème caractère de la phrase de passe et où y représente la position relative de l'octet en question dans la clé. Y est toujours compris entre 1 et la longueur de la clé. Ainsi, si le premier caractère de la phrase est un A, on implantera le premier octet de la clé à la ligne correspondant au signe A et à la colonne 1. On procède de la même façon pour les 64 octets de la clé citée à titre d'exemple ci-dessus.
Pour reconstituer cette clé publique, le programme d'application invite l'utilisateur à introduire sa phrase de passe au clavier ou par tout autre moyen, puis détermine les coordonnées correspondantes de chacun des octets formant la clé. La clé est ensuite reconstituée par lecture des différentes valeurs situées aux coordonnées reconstituées.

Il est évident que d'autres méthodes permettant de dissocier une clé et de la disperser dans une table de nombres peuvent être envisagées. Le but à atteindre étant de rendre sa reconstitution difficile par simple analyse du fichier exécutable servant de support au programme d'application.

Ainsi, une paire de clés asymétriques (par exemple de type RSA) est associée d'une part à une carte à puce et d'autre part à une copie du logiciel d'application. Dans la phase d'initialisation, l'utilisateur doit préalablement introduire la carte à puce dans le lecteur connecté à l'ordinateur puis lancer le programme d'application. Ce dernier vérifie tout d'abord la présence de la carte dans le lecteur, par exemple en interrogeant le bus de ce dernier. Si une carte est présente dans le lecteur, le programme invite l'utilisateur à saisir au clavier la phrase de passe qui lui permettra de reconstituer la clé publique stockée dans la table de nombres mentionnée précédemment. Le programme envoie ensuite un signal d'initialisation à la carte à puce. A réception de ce signal, la carte génère un nombre aléatoire à l'aide de son générateur analogique de nombres aléatoires. Ce nombre aléatoire est tout d'abord sauvegardé dans une mémoire temporaire puis transmis au programme d'application. Le programme d'application chiffre ce nombre aléatoire à l'aide d'un algorithme asymétrique, par exemple de type RSA, en utilisant la clé publique préalablement reconstituée et transmet le nombre aléatoire chiffré à la carte à puce. A réception de ce nombre, la carte à puce déchiffre le message reçu à l'aide de la clé privée contenue dans sa mémoire protégée et compare le résultat obtenu avec le nombre aléatoire précédemment sauvegardé dans sa mémoire. En cas d'égalité de ces deux nombres, la carte à puce transmet une confirmation au programme d'application qui va poursuivre son exécution. Si le nombre obtenu n'est pas identique à celui préalablement sauvegardé dans la mémoire de la carte à puce, la carte émet en direction du programme d'application une réponse négative qui provoque l'arrêt immédiat de ce dernier. On remarque différents avantages du point de vue de la sécurité. Premièrement, seule une combinaison unique carte à puce + programme d'application peut fonctionner. En second lieu, les clés stockées aussi bien dans la carte à puce que dans le programme d'application sont très difficiles d'accès. En effet la clé asymétrique stockée dans la carte à puce ne peut pas être lue à l'aide d'un lecteur puis qu'elle se trouve dans une zone protégée de la mémoire. La clé publique correspondante résidant dans le fichier exécutable du programme d'application ne figure pas en clair dans ce dernier, elle est en effet éclatée et dispersée dans une table de nombres. De plus, aucune information sensible n'est transmise entre le lecteur et l'ordinateur puisqu'ils n'échangent qu'un nombre aléatoire, une fois en clair et en retour sous forme chiffrée. On sait qu'avec des codages asymétriques et en particulier le codage RSA, il n'est pas possible de reconstituer la clé qui a permis de chiffrer le message même si l'on dispose à la fois du message en clair et du message chiffré. Enfin la clé publique du programme d'application, une fois reconstituée, n'est présente que dans la mémoire volatile de l'ordinateur et ne laisse donc aucune trace après la session du programme. Grâce à cette séquence d'initialisation on assure un niveau de sécurité élevé en n'autorisant le déroulement du programme d'application que lorsque ce dernier est associé à une carte à puce reconnue par le programme et que cette dernière est présente dans le lecteur.

Une fois que cette initialisation s'est déroulée avec succès, l'utilisateur a accès aux fonctions auxquelles la carte lui donne droit. A titre d'exemple, une méthode de chiffrement d'un fichier va maintenant être décrite. Le programme d'application, après une initialisation réussie, démarre une tâche qui vérifie à intervalle de temps régulier, la présence de la carte dans le lecteur. Si cette dernière est retirée du lecteur, le programme se termine et il faut recommencer la séquence d'initialisation décrite ci-dessus. Le programme d'application invite ensuite l'utilisateur à saisir le nom du fichier qui doit être chiffré avant sa transmission. Le programme d'application ou préférentiellement la carte à puce fournit un nombre aléatoire et le programme l'utilise, après vérification de son acceptabilité, en qualité de clé symétrique par exemple de type DES. Cette clé est ensuite chiffrée à l'aide d'un algorithme asymétrique à l'aide de la clé publique reconstituée.

Le programme d'application sauvegarde en mémoire la clé symétrique chiffrée, puis chiffre n'importe quel document ou transaction informatique en utilisant un algorithme symétrique standard à l'aide de la clé symétrique. Il forme ensuite un message comportant le fichier crypté par l'algorithme symétrique ainsi que la clé symétrique, elle même cryptée par l'algorithme asymétrique. Ces deux éléments sont ensuite réunis en un seul fichier informatique. Les étapes suivantes sont classiques dans les programmes de chiffrement et peuvent comporter plusieurs autres étapes. On citera en particulier l'effacement du fichier source en clair et la suppression de tout fichier temporaire créé lors du chiffrement symétrique. A la fin de ces étapes, on se trouve en présence d'une image mémoire qui représente un fichier comportant le message original crypté ainsi que la clé symétrique également cryptée. Cette image mémoire peut ensuite être sauvegardée sur une mémoire de masse telle qu'un disque dur de l'ordinateur en vue de sa transmission par tout moyen approprié, que ce soit à travers un réseau de communication (Internet, Intranet etc..) ou par l'envoi d'un support de données (disquette, CD-ROM etc.).

Pour déchiffrer le message transmis, les opérations inverses sont effectuées par le récipiendaire du message. L'utilisateur introduit tout d'abord sa carte dans le lecteur puis lance le programme d'application. Les étapes d'initialisation sont identiques à celles décrites ci-dessus et permettent de vérifier que la copie du programme utilisée et la carte à puce correspondent bien. Ensuite, l'utilisateur choisit l'option de déchiffrement du programme d'application puis il est invité à spécifier le fichier sur lequel il désire travailler. Le programme d'application commence par séparer de ce fichier, la clé symétrique cryptée du document chiffré à l'aide de cette clé. La carte à puce transmet ensuite sa clé asymétrique privée au programme d'application qui décrypte ensuite la clé symétrique à l'aide de la clé asymétrique transmise. Le programme d'application déchiffre ensuite le document à l'aide de la clé symétrique ainsi obtenue et met le fichier déchiffré à disposition de l'utilisateur.

Dans une variante, le programme d'application transmet la clé symétrique chiffrée à la carte à puce qui la décrypte à l'aide de sa clé asymétrique privée. La carte à puce transmet alors la clé symétrique décryptée au programme d'application qui l'utilise pour décrypter le fichier de données.

Cette méthode de chiffrement permet de garantir qu'un message chiffré transmis ne peut être déchiffré que par un utilisateur possédant une carte à puce spécifique et une copie du logiciel correspondant. Il est également à remarquer que dans le procédé de chiffrement mentionné ci-dessus la clé symétrique utilisée pour chiffrer le document lui-même est unique et n'est utilisée qu'une seule fois ce qui rend le système moins vulnérable en cas d'interception d'un message chiffré lors de sa transmission. Cette manière de faire ne pose pas non plus de problèmes pour l'archivage des messages échangés puisqu'un message transmis contient à la fois le document chiffré et la clé unique qui a été utilisée pour le chiffrer, cette dernière étant elle-même chiffrée avec un autre algorithme.

Dans une variante, la clé de session symétrique est générée par la carte à puce puis transmise au programme d'application. Ce dernier à réception de la clé symétrique, chiffre le document à traiter à l'aide de cette clé. Il crypte ensuite cette même clé symétrique par l'algorithme asymétrique en utilisant sa clé publique reconstituée. Les étapes suivantes sont ensuite identiques à celle décrites précédemment.

Pour rendre l'utilisateur indépendant du fournisseur du système décrit précédemment, on peut prévoir que les clés asymétriques utilisées pour chiffrer et déchiffrer les clés symétriques de session soient différentes de celles utilisées durant l'étape d'initialisation. En effet dans l'exemple décrit ci-dessus, on utilise une seule paire de clés asymétriques, l'une privée implantée dans une zone mémoire protégée de la carte à puce et l'autre publique dispersée dans le programme d'application. Cette paire de clés asymétriques est connue du fournisseur du système qui les a implantées dans la carte à puce, respectivement dans le programme d'application. L'utilisateur du système peut donc souhaiter que cette paire de clés asymétriques ne serve qu'à l'étape d'initialisation permettant de valider l'accès à un terminal comme décrit ci-dessus mais ne soit pas utilisées pour chiffrer la clé de session symétrique utilisée pour chiffrer les données. A cet effet on prévoit des cartes à puce qui comportent plusieurs zones mémoire différentes. Une première zone mémoire protégée en écriture et en lecture contenant la clé privée donnant accès à une copie du logiciel comprenant la clé publique correspondante comme précédemment décrit, et une seconde zone mémoire accessible uniquement lorsque l'étape d'initialisation a réussi. Lorsque l'étape d'initialisation a réussi, le programme d'application permet de générer une seconde paire de clés asymétriques, par exemple de type RSA, qui sont mémorisées dans la carte à puce. Pour ce faire, la carte à puce génère deux nombres aléatoires et les transmet au logiciel d'application. Le logiciel calcule une paire de clés asymétriques à partir de ces deux nombres aléatoires et vérifie que les critères d'acceptabilité des clés sont respectés. Les clés ainsi générées sont: ensuite transmises à la carte à puce qui les sauvegarde dans la seconde zone mémoire mentionnée ci-dessus. Selon l'utilisation désirée, on peut stocker dans la carte à puce la paire de clés calculées, c'est-à-dire la clé privée et la clé publique. Ces cartes à puces dites privées, contiennent à la fois une clé publique et une clé privée correspondante. Elles permettent donc de chiffrer et de déchiffrer les clés de session utilisées pour chiffrer les données. On peut également ne stocker que la clé publique dans la carte à puce, cette dernière ne peut alors être utilisée que pour l'opération de chiffrement.

Lorsque l'on utilise deux paires de clés asymétriques, les opérations de chiffrement d'un fichier se déroulent comme suit. L'étape d'initialisation est identique à celle décrite précédemment. Lorsque l'initialisation utilisant la première paire de clés a réussi, le programme d'application demande à la carte de lui fournir un nombre aléatoire qui sert de clé symétrique pour chiffrer les données. La carte à puce chiffre ensuite cette clé symétrique à l'aide de la clé asymétrique publique contenue dans la seconde zone mémoire protégée et transmet cette clé symétrique chiffrée au programme d'application. Ce dernier forme une image mémoire regroupant la clé symétrique chiffrée par l'algorithme asymétrique et les données chiffrées selon l'algorithme symétrique. Cette image mémoire peut ensuite être transmise à son destinataire.

L'opération de déchiffrement comporte les étapes suivantes. Après une initialisation réussie, utilisant la première paire de clés (clé privée dans la carte et clé publique dispersée dans le programme d'application), le programme d'application sépare la clé symétrique chiffrée des données, puis transmet la clé symétrique chiffrée à la carte à puce qui la déchiffre à l'aide de la clé privée du second jeu de clé asymétrique. La clé symétrique, une fois décryptée par la carte à puce est transmise au programme d'application qui s'en sert pour déchiffrer le fichier de données à l'aide d'un algorithme symétrique. Dans une variante, la seconde clé privée implantée dans la carte à puce peut être transmise au programme d'application qui s'en sert pour déchiffrer la clé symétrique à l'aide d'un algorithme asymétrique.

Dans les deux variantes exposées ci-dessus, on peut prévoir que la clé publique stockée dans le programme d'application et servant à authentifier une combinaison valable carte/programme (initialisation) soit sauvegardée en clair dans le programme d'application, c'est-à-dire sans être dispersée dans une table de nombres. Dans ce cas, l'utilisateur n'a pas besoin de saisir une phrase de passe pour reconstituer la clé publique du programme d'application. En revanche, on prévoit l'utilisation d'un code d'identification personnel (PIN CODE) implanté dans une zone mémoire protégée de la carte à puce. Lorsque l'étape d'initialisation a réussi entre la carte et le logiciel d'application, l'utilisateur est invité à saisir le code d'identification. Le code saisi est comparé à celui stocké dans la carte à puce et en cas d'adéquation, le programme est autorisé à poursuivre ses fonctions. Si l'utilisateur entre un code erroné plusieurs fois consécutives, on peut prévoir le blocage de la carte.

Dans une forme d'exécution préférée, on réduit la taille des fichiers à traiter en les comprimant à l'aide d'un algorithme de compression avant les opérations de chiffrement. Le fichier de données préalablement comprimé est alors chiffré selon les méthodes exposées ci-dessus en vue de sa transmission. En travaillant sur des fichiers de données préalablement compressés, on réduit le temps nécessaire à leur chiffrement.

Les exemples ci-dessus illustrent une méthode de chiffrement d'un fichier informatique, il est évident que la partie application du programme peut prévoir d'autres fonctions comme par exemple l'implantation d'une signature digitale chiffrée dans un document, ce qui permet de connaître avec certitude l'auteur du document. La technique de génération d'une signature digitale ne sera pas décrite dans la présente demande, mais elle utilise des étapes similaires à celles décrites ci-dessus, le rôle des clés asymétriques étant cependant différent.

Le même principe est applicable à un programme qui aurait pour but de garantir l'intégrité d'un document (appelé certificat). On calcule par exemple un agrégat ou condensat sur le document que l'on ajoute au fichier initial. Ainsi toute modification du document original conduit à un agrégat ou condensat différent. On peut ainsi contrôler toute altération du document original.

Les avantages d'une telle méthode et du système pour sa mise en oeuvre sont nombreux et permettent de garantir une sécurité optimale. On notera en particulier que seuls les détenteurs d'une carte à puce comprenant une clé privée, par exemple de type RSA, identique ainsi que la copie correspondante du programme d'application peuvent chiffrer et déchiffrer les messages leur étant destinés. De plus aucune information sensible comme les clés publiques ne transite en clair sur le réseau entre les deux correspondants. Enfin la clé publique dispersée dans le fichier contenant le code exécutable de l'application ne peut pas être reconstituée sans connaître la phrase de passe. Quand au message transmis sur le réseau de communication ou par échange de support, il est chiffré de manière sûre au moyen d'un algorithme symétrique par exemple de type DES et contient la clé qui a permis de le chiffrer sous une forme qui ne peut être déchiffrée que par le détenteur d'une carte et d'une copie du programme adéquate. Le fait que le message transmis contienne la clé symétrique, elle-même codée, facilite également l'archivage des données. Enfin la clé symétrique de session est unique de sorte que si elle était déchiffrée par un utilisateur non autorisé, elle ne permet de déchiffrer qu'un seul message ou transaction.

Dans une variante, on prévoit l'implantation de plusieurs clés asymétriques publiques dans le logiciel d'application et/ou dans la carte à puce de manière à pouvoir chiffrer des documents pour différents utilisateurs possédant des cartes à puce distinctes.

## Revendications

1. Procédé permettant de sécuriser des données numériques en vue de leur transmission sur un réseau de communication par un programme d'application exécuté sur un ordinateur muni de moyens de lecture d'une carte à puce, comprenant les étapes suivantes :
- vérification par le programme d'application de la présence d'une carte à puce dans le lecteur,
- une phase d'initialisation de la carte à puce durant laquelle on vérifie que la dite carte à puce est autorisée à coopérer avec le programme d'application exécuté sur l'ordinateur à l'aide d'une opération de chiffrement asymétrique utilisant une première paire de clés asymétriques, la clé privée de cette première paire de clés étant stockée dans une zone protégée de la carte à puce et la clé publique correspondante étant stockée dans le fichier servant de support au programme d'application,
- vérification par le programme d'application que la carte à puce autorisée comporte une seconde paire de clé asymétrique ou au moins une seconde clé asymétrique publique mémorisée dans une zone de mémoire protégée de la carte et si tel n'est pas le cas
- génération d'une seconde paire de clés asymétriques à partir de deux nombres aléatoires transmis par la carte à puce,
- mémorisation de la paire de clé asymétrique calculée ou au moins de la clé asymétrique publique calculée dans une zone mémoire protégée de la carte à puce
- saisie par l'utilisateur du nom du fichier de données à traiter,
- génération d'un nombre aléatoire par la carte à puce et transmission de ce nombre aléatoire au programme d'application,
- chiffrement de ce nombre aléatoire avec un algorithme asymétrique en utilisant la seconde clé publique mémorisée dans la carte à puce,
- chiffrement du fichier de données par le programme d'application avec un algorithme de chiffrement symétrique utilisant, en tant que clé de session, le nombre aléatoire transmis par la carte à puce,
- formation d'une image mémoire contenant le fichier de données chiffrés par l'algorithme symétrique ainsi que la clé de session symétrique, elle même chiffrée par un algorithme asymétrique utilisant la clé publique de la seconde paire de clé asymétrique mémorisée dans la carte à puce,
- Transmission ou archivage de l'image mémoire ainsi obtenue.

2. Procédé selon la revendication 1, **caractérisé par le fait que** l'étape d'initialisation de la carte à puce comporte les étapes suivantes
- génération d'un nombre aléatoire par la carte à puce,
- sauvegarde de ce nombre aléatoire dans une mémoire de la carte à puce,
- transmission du nombre aléatoire au programme d'application,
- chiffrement du nombre aléatoire par le programme d'application à l'aide d'une clé publique asymétrique stockée dans le programme d'application
- transmission du nombre aléatoire chiffré à la carte à puce,
- déchiffrement par la carte à puce du nombre aléatoire transmis en utilisant la clé asymétrique privée stockée dans la carte,
- comparaison du nombre sauvegardé et du résultat obtenu à l'étape précédente.

3. Procédé selon l'une des revendications précédentes, **caractérisé par le fait qu'**il comporte, après la phase d'initialisation les étapes supplémentaires suivantes:
- saisie par l'utilisateur d'un code d'identification,
- comparaison par le programme d'application ou par la carte à puce du code saisi, avec un code d'identification résidant dans une zone protégée de la mémoire de la carte à puce.

4. Procédé selon l'une des revendications précédentes, **caractérisé par le fait que** la clé asymétrique publique, issue du premier jeu de clés asymétriques est reconstituée à partir de nombres contenus dans le fichier servant de support au programme d'application et d'informations saisies par l'utilisateur.

5. Procédé selon la revendication 4, **caractérisé par le fait que** la reconstitution de la clé asymétrique publique par le programme d'application s'effectue en faisant correspondre chaque caractère d'une phrase de passe saisie par l'utilisateur, ainsi que la position de ce caractère dans la phrase à une paire de coordonnées permettant de déterminer la position d'un élément de la clé dans une table de nombres à deux dimensions contenant les différents éléments constituant la clé asymétrique.

6. Procédé selon l'une des revendications précédentes, **caractérisé par le fait que** l'algorithme de chiffrement asymétrique ainsi que les clés de chiffrement sont de type RSA.

7. Procédé selon l'une des revendications précédentes, **caractérisé par le fait que** l'algorithme de chiffrement symétrique utilisé ainsi que la clé symétrique sont de type DES.

## Claims

1. Method for securing digital data in view of their transmission on a communication network by an application program executed in a computer connected to means allowing reading a smart chip card, **characterised in that** it comprises the following steps:
- checking by the application program of the presence of a smart chip card in the card reader,
- performing an initialisation phase of the smart chip card during which occurs a check that said smart chip card is authorised to cooperate with the application program executed on the computer thanks to an operation of asymmetric ciphering using a first pair of asymmetric keys, the private key of said first pair of asymmetric keys being stored in a protected zone of the smart chip card and the corresponding public key being stored in the file being the support of the application program,
- verification by the application program that the authorised smart chip card comprises a second pair of asymmetric keys or at least a second asymmetric public key stored in a protected memory zone of the smart chip card and if it is not the case
- generation of a second pair of asymmetric keys from two random numbers transmitted by the smart card chip,
- storing of the calculated asymmetric keys pair or at least of the calculated public asymmetric key in a protected memory zone of the smart chip card
- input by the user of the name of the data file to be treated
- generation of a random number by the smart chip card and transfer of this random number to the application program,
- ciphering of the random number by means of an asymmetric ciphering algorithm using the second public key stored in the smart chip card
- ciphering of the data file by the application program with a symmetric ciphering which uses, as session key, the random number transmitted by the smart chip card,
- forming a memory image comprising the data file ciphered with the symmetrical algorithm as well as the symmetric session key having served to its ciphering, the key itself being ciphered by an asymmetric algorithm using the public key of the second pair of asymmetric keys stored in the smart chip card
- transmitting or archiving the resultant memory image.

2. Method according to claim 1, **characterised in that** the initialisation phase of the smart chip card comprises the following steps:
- generating a random number by the smart chip card,
- storing this random number in a memory area of the smart chip card,
- transmitting the random number to the application program,
- ciphering of the random number by the application program with an asymmetric public key stored in the application program,
- transmission of the ciphered random number to the smart chip card,
- de-ciphering by the smart chip card of the transmitted random number using the private asymmetric key stored in the smart chip card,
- comparing the stored number with the result obtained at the previous step.

3. Method according to one of the preceding claim, **characterised in that** it comprises, after the initialisation phase, the following supplementary steps:
- input by the user of an identification code,
- comparison by the application program or by the smart chip card of the entered identification code with an identification code residing in a protected area of the memory of the smart chip card.

4. Method according to one of the preceding claim, **characterised in that** the public asymmetric key, coming from the first pair of asymmetric keys is reconstituted from numbers included in the file being the support of the application program and from information entered by the user.

5. Method according to claim 4, **characterised in that** the reconstitution by the application program of the public asymmetric key is performed by associating each character of a pass phrase entered by the user, as well as the position of said character in the pass phrase to a pair of coordinates permitting to determine the position of an element of the key in a two-dimensional table of numbers comprising the various elements forming the asymmetric key.

6. Method according to one of the preceding claims, **characterized in that** the asymmetric ciphering algorithm as well as the ciphering keys are of the RSA type.

7. Ciphering process according one of the above claims, **characterised by** the fact that the ciphering symmetric algorithm used as well as the symmetrical key are of the DES type

## Patentansprüche

1. Verfahren, das die Absicherung von digitalen Daten im Hinblick auf ihre Übermittlung über ein Kommunikationsnetz durch ein Anwendungsprogramm erlaubt, das auf einem Rechner abläuft, der mit Mitteln zum Auslesen einer Chipkarte versehen ist, und das die folgenden Schritte umfasst:
- Überprüfung des Vorhandenseins einer Chipkarte im Leser durch das Anwendungsprogramm,
- eine Phase der Initialisierung der Chipkarte, während der mit Hilfe einer asymmetrischen Verschlüsselungsoperation überprüft wird, dass diese Chipkarte autorisiert ist, mit dem auf dem Rechner ablaufenden Anwendungsprogramm zusammenzuwirken, wobei ein erstes Paar asymmetrischer Schlüssel verwendet wird, der private Schlüssel dieses ersten Schlüsselpaares in einem geschützten Bereich der Chipkarte gespeichert ist und der entsprechende öffentliche Schlüssel in der Datei gespeichert ist, die als Support des Anwendungsprogramms dient,
- Überprüfung durch das Anwendungsprogramm, dass die autorisierte Chipkarte ein zweites Paar asymmetrischer Schlüssel oder zumindest einen zweiten asymmetrischen öffentlichen Schlüssel umfasst, der in einem geschützten Speicherbereich der Karte gespeichert ist, und falls dies nicht der Fall ist,
- Erzeugung eines zweiten Paares asymmetrischer Schlüssel aus zwei von der Chipkarte übermittelten Zufallszahlen,
- Speicherung des berechneten Paares asymmetrischer Schlüssel oder zumindest des berechneten asymmetrischen öffentlichen Schlüssels in einem geschützten Speicherbereich der Chipkarte,
- Erfassung des Namens der Datei der zu verarbeitenden Daten durch den Benutzer,
- Erzeugung einer Zufallszahl durch die Chipkarte und Übermittlung dieser Zufallszahl an das Anwendungsprogramm,
- Verschlüsselung dieser Zufallszahl mit einem asymmetrischen Algorithmus unter Verwendung des in der Chipkarte gespeicherten, zweiten öffentlichen Schlüssels,
- Verschlüsselung der Datei der Daten durch das Anwendungsprogramm mit einem symmetrischen Verschlüsselungsalgorithmus unter Verwendung der durch die Chipkarte übermittelten Zufallszahl als Sitzungsschlüssel,
- Bildung eines Speicherbildes, das die Datei von mit dem symmetrischen Algorithmus verschlüsselten Daten sowie den symmetrischen Sitzungsschlüssel enthält und seinerseits mit einem asymmetrischen Algorithmus unter Verwendung des in der Chipkarte gespeicherten, öffentlichen Schlüssels des zweiten Paares asymmetrischer Schlüssel verschlüsselt worden ist,
- Übermittlung oder Archivierung des so gewonnenen Speicherbildes.

2. Verfahren nach Anspruch 1, **dadurch gekennzeichnet, dass** der Schritt der Initialisierung der Chipkarte die folgenden Schritte umfasst:
- Erzeugung einer Zufallszahl durch die Chipkarte,
- Sicherstellung dieser Zufallszahl in einem Speicher der Chipkarte,
- Übermittlung der Zufallszahl an das Anwendungsprogramm,
- Verschlüsselung der Zufallszahl durch das Anwendungsprogramm mit Hilfe eines im Anwendungsprogramm gespeicherten, asymmetrischen öffentlichen Schlüssels,
- Übermittlung der verschlüsselten Zufallszahl an die Chipkarte,
- Entschlüsselung der übermittelten Zufallszahl durch die Chipkarte unter Verwendung des in der Karte gespeicherten, asymmetrischen privaten Schlüssels,
- Vergleich der sichergestellten Zahl mit dem im vorangegangenen Schritt gewonnenen Ergebnis.

3. Verfahren nach einem der vorangegangenen Ansprüche, **dadurch gekennzeichnet, dass** es nach der Phase der Initialisierung die folgenden zusätzlichen Schritte umfasst:
- Erfassung eines ID-Codes durch den Benutzer,
- Vergleich des erfassten Codes mit einem in einem geschützten Bereich des Speichers der Chipkarte vorhandenen ID-Code durch das Anwendungsprogramm oder durch die Chipkarte.

4. Verfahren nach einem der vorangegangenen Ansprüche, **dadurch gekennzeichnet, dass** der aus dem ersten Satz asymmetrischer Schlüssel hervorgegangene asymmetrische öffentliche Schlüssel durch Zahlen, die in der Datei enthalten sind, die als Support für das Anwendungsprogramm dienen, sowie aus durch den Benutzer erfassten Informationen rekonstituiert wird.

5. Verfahren nach Anspruch 4, **dadurch gekennzeichnet, dass** die Rekonstitution des asymmetrischen öffentlichen Schlüssels durch das Anwendungsprogramm erfolgt, indem jedes Zeichen einer durch den Benutzer erfassten Passphrase sowie die Position dieses Zeichens in der Phrase mit einem Paar von Koordinaten in Übereinstimmung gebracht wird, die es ermöglichen, die Position eines Elements des Schlüssels in einer zweidimensionalen Zahlentabelle zu ermitteln, die die verschiedenen Elemente enthält, die den asymmetrischen Schlüssel bilden.

6. Verfahren nach einem der vorangehenden Ansprüche, **dadurch gekennzeichnet, dass** der asymmetrische Verschlüsselungsalgorithmus wie auch die Verschlüsselungsschlüssel vom RSA-Typ sind.

7. Verfahren nach einem der vorangehenden Ansprüche, **dadurch gekennzeichnet, dass** der verwendete symmetrische Verschlüsselungsalgorithmus wie auch der symmetrische Schlüssel vom DES-Typ sind.
